(19) **Europäisches Patentamt / European Patent Office / Office européen des brevets**

(11) **EP 1 743 757 A1**

(12) **EUROPEAN PATENT APPLICATION**
published in accordance with Art. 158(3) EPC

(43) Date of publication:
**17.01.2007 Bulletin 2007/03**

(51) Int Cl.:
**B29C 53/06** (2006.01)   **B65B 61/00** (2006.01)

(21) Application number: **04724385.2**

(22) Date of filing: **30.03.2004**

(86) International application number:
**PCT/JP2004/004532**

(87) International publication number:
**WO 2005/087479 (22.09.2005 Gazette 2005/38)**

(84) Designated Contracting States:
**CH GB LI**

(30) Priority: **12.03.2004 JP 2004069887**

(71) Applicant: SUZUKI, Kunitsugu
**Tokyo 1330061 (JP)**

(72) Inventor: **SUZUKI, Kunitsugu**
**Tokyo 1330061 (JP)**

(74) Representative: **Lamb, Martin John Carstairs**
**Marks & Clerk**
**90 Long Acre**
**GB-London WC2E 9RA (GB)**

(54) **DEVICE FOR MANUFACTURING PLASTIC SHEET HAVING FOLDABLE RULED LINE**

(57)  A creased-plastic-sheet manufacturing apparatus which can warm a plastic sheet to uniform temperature, and can form smooth creasing lines on the sheet is provided. The creased-plastic-sheet manufacturing apparatus includes a punching apparatus for manufacturing a plastic sheet having creasing lines, which is folded into a container or the like, the creased-plastic-sheet manufacturing apparatus being **characterized in that** the punching apparatus includes:

(1) a flat platen to which a cutting die is secured, the cutting die carrying cutting blades, including a creasing-line forming blade, embedded into the cutting die; and
(2) a temperature-maintaining platen disposed in opposition to the flat platen and equipped with a temperature-maintaining mechanism including a flow passage formed within the temperature-maintaining platen, the flow passage being formed of fine channels through which a temperature-maintaining liquid can be passed.

FIG.2

**Description**

TECHNICAL FIELD

The present invention relates to an apparatus for manufacturing a plastic sheet having creasing lines (hereinafter referred to as a "creased-plastic-sheet manufacturing apparatus"), which enables manufacture of plastic products; e.g., a container formed by folding a plastic sheet formed of, for example, PET.

BACKGROUND ART

A plastic sheet having creasing lines is manufactured through various steps, including cutting a rolled elongated plastic sheet into a plate-shaped sheet, performing die cutting and creasing-line formation by use of a flat punching machine, bending the plate-shaped sheet, bonding the plate-shaped sheet by use of adhesive, and performing antistatic treatment. In recent years, formation of creasing lines can be performed simultaneously with die cutting by use of a flat punching machine. Plastics such as PET (polyethylene terephthalate), PVC (polyvinyl chloride), and PP (polypropylene) are used as a material of products.

The above mentioned materials are all thermoplastic and can be deformed upon application of heat. For example, in the case where a rolled elongated plastic sheet is cut into a plate-shaped sheet, the elongated plastic sheet is passed between heating rolls (heating rollers) so as to be heated, and is allowed to travel straight over a given distance to thereby be cooled, whereby a curl or a like deformation is eliminated, and a straight sheet can be obtained. Subsequently, the straight sheet is cut at equal intervals, whereby plate-shaped plastic sheets of constant size can be manufactured. In an emboss process in which an uneven pattern is formed on the surface of each plastic sheet, concave pits can be formed by means of passing the sheet between emboss rolls in a heated state. In the case where heating is performed by means of a heating roll, a method of heating the roll to a predetermined temperature by means of hot oil fed into the interior of the roll (roller) is employed. A method in which water is used in place of oil is also used. In the case where a complicated pattern is to be formed, there may be employed a method in which an object is nipped between a male die (convex die) and a female die (concave die), and a pattern is formed on the object through application of pressure. In the case of plastic sheet, a method in which the male die is heated so as to apply pressure to a sheet in a hot state (hot embossing). In this case, as a method of heating the female die, there is employed a method of electrically heating the female die by means of a nichrome wire passed through the female die.

In the case where creasing lines are to be formed on a plastic sheet, a sharp creasing-line forming blade or a heated creasing-line forming blade is pressed against the sheet, because if a creasing-line forming blade is pressed against the plastic sheet at ordinary temperature, cracks are likely to be formed. Japanese Patent Application Laid-Open (kokai) No. H08-294961 (hereinafter referred to as Patent Document 1) discloses an invention (entitled "Method of Processing a Plastic Sheet having Creasing Lines") regarding a method for forming creasing lines without heating a crease-line forming blade. In this invention, a plate formed of aluminum plate and having a hardness lower than that of the crease-line forming blade is placed under a plastic sheet, a groove is previously formed on the plate at a position corresponding to the creasing-line forming blade, and the creasing-line forming blade is pressed against the plastic sheet. Meanwhile, Japanese Patent Application Laid-Open (kokai) No. H10-024488 (hereinafter referred to as Patent Document 2) discloses an invention (entitled "Creasing-Line Forming Method and Creasing-Line Forming Apparatus") regarding a method for forming creasing lines while heating a crease-line forming blade. In this invention, a self-heating crease-line forming blade formed of an electric heating material is used, and the crease-line forming blade heated upon application of electricity to the blade is pressed against the plastic sheet so as to form creasing lines.

In manufacture of plastic sheets having creasing lines, control of temperature during the manufacturing work is important. In particular, the temperature of a plastic sheet at the time when creasing lines are formed thereon greatly influences the quality of formed creasing lines. In general, formation of creasing lines can be performed well when a plastic sheet is maintained at a temperature of about 30°C to 40°C. Therefore, use of a heated crease-line forming blade as shown in Patent Document 2 is unnecessary. Although the manufacturing work can be performed at a temperature near ordinary temperature, there is a problem in that maintaining the entire surface of a plastic sheet, on which creasing lines are to be formed, at a uniform temperature of about 30°C to 40°C is difficult, because of the large area of the plastic sheet, which is placed on a creased-plastic-sheet manufacturing apparatus.

The depth to which the creasing-line forming blade bites a plastic sheet is very small, and formation of creasing lines is strongly influenced by small changes in temperature. Therefore, if the temperature of a plastic sheet changes locally, the proportion of defective products increases. A nichrome wire can be embedded in a lower platen of the creased-plastic-sheet manufacturing apparatus. However, since the lower platen cannot have a sufficiently large thickness from the viewpoint of the structure of the apparatus, making the surface temperature of the plastic sheet uniform is difficult. Therefore, an object of the present invention is to solve the above-described problem and to provide a creased-plastic-sheet manufacturing apparatus which can heat a plastic sheet to uniform temperature, and can form smooth creasing lines on the sheet.

DISCLOSURE OF THE INVENTION

In order to solve the above-described problems, the invention described in claim 1 provides a creased-plastic-sheet manufacturing apparatus including a punching apparatus for manufacturing a plastic sheet having creasing lines, which is folded into a container or the like, the creased-plastic-sheet manufacturing apparatus being characterized in that the punching apparatus includes:

(1) a flat platen to which a cutting die is secured, the cutting die carrying cutting blades, including a creasing-line forming blade, embedded into the cutting die; and
(2) a temperature-maintaining platen disposed in opposition to the flat platen and equipped with a temperature-maintaining mechanism including a flow passage formed within the temperature-maintaining platen, the flow passage being formed of fine channels through which a temperature-maintaining liquid can be passed.

An important point associated with warming of a plastic sheet is rendering the temperature of the sheet uniform. If a sheet has a temperature variation, neat and smooth creasing lines cannot be obtained (the depth of creasing lines varies). In view of this, the present invention uses warm water so as to uniformly heat the sheet. Water has a higher specific heat capacity than other fluids (e.g., oil), and is less likely to cool even after transferring heat to a sheet. Therefore, water is suitable for maintaining a temperature stable and uniform.

In the present invention, in order to form smooth creasing lines, a creased-plastic-sheet manufacturing apparatus, which is one constituent element of a plastic product manufacturing apparatus, is configured as follows. First, in order to heat a plastic sheet, a temperature-maintaining platen (flat platen) is provided on the apparatus. The temperature-maintaining platen is configured in such a manner that the temperature-maintaining platen is warmed, and when a sheet is transferred on the temperature-maintaining platen, heat of the temperature-maintaining platen can be transferred to the sheet. After the sheet has received the transferred heat, the creasing-line forming blade is pressed against the sheet from the above, and is then separated from the sheet, whereby smooth creasing lines can be formed.

Warm water is used to warm the temperature-maintaining platen. In the present invention, the temperature distribution on the sheet must be uniform. Therefore, in order to facilitate warm water to flow over the entire temperature-maintaining platen, a plurality of fine channels are provided in the temperature-maintaining platen, and a state in which the warm water fills the fine channels is maintained. Further, in order to consistently circulate warm water, fine holes are provided in the temperature-maintaining platen, and warm water is continuously introduced into the fine holes via warm water pipes.

The creased-plastic-sheet manufacturing apparatus includes an upper platen fixing section and a lower platen moving section. A cutting die is attached to the upper platen fixing section, and the temperature-maintaining platen is attached to the lower platen moving section. A cutting die into which cutting blades and a creasing-line forming blade are embedded is attached to the upper platen. The cutting edge (tip end) of the creasing-line forming blade is made slightly shorter than those of the cutting blades. After a plastic sheet is transported onto the temperature-maintaining platen, the sheet is cut into the shape corresponding to a developed view of a product, and at the same time, the creasing-line forming blade is pressed against the sheet on the temperature-maintaining platen to an intermediate point (with respect to the thickness direction of the sheet) so as to form a creasing line. By virtue of this configuration, when various types of products are to be manufactured, cutting and formation of creasing lines can be performed for the various types of products through a simple operation of changing the cutting die of the upper platen. Needless to say, the temperature of warm water to be circulated must be adjusted in accordance with the type or thickness of a material to be used.

The creasing lines formed in accordance with the present invention are characterized in that they are not wavy and are smooth. Therefore, it is possible to facilitate assembly of products and to form bent portions having a neat appearance (for example, bent portions are smooth, and the material does not become cloudy when bent).

In the present invention, since a plastic sheet is uniformly heated by means of warm water, use of a heated creasing-line forming blade is not required. Further, there can be employed a conventional flat punching machine. However, since the lower platen uses a movable-type temperature-maintaining platen, the temperature-maintaining platen must be disposed. Once the temperature-maintaining platen is exchanged (or is disposed), the temperature-maintaining platen can cope with any type of product and with plastic sheets of different thicknesses and materials. Therefore, it is unnecessary to prepare a temperature-maintaining platen for each type or to replace the temperature-maintaining platen every time a different plastic sheet is to be processed, because the apparatus of the present invention can cope with a change in material or type by means of adjusting the temperature of the temperature-maintaining platen.

Since circulating warm water is used to heat the temperature-maintaining platen, sheets can be warmed to a predetermined temperature even when continuous operation is performed. This is possible because water is a fluid having a high specific heat capacity. A plurality of fine channels are provided within the temperature-maintaining platen, and a state in which the channels are filled with warm water is maintained. In addition, in order to cause warm water to continuously circulate, fine holes are provided within the temperature-maintaining platen, and warm water is always introduced into the fine holes via warm water pipes. Therefore, a state in which the interior of the temperature-maintaining platen is filled with warm water can be maintained at all times, whereby the entire temperature-maintaining platen can be maintained at a predetermined temperature in a uniform and stable manner.

When cutting blades and a creasing-line forming blade are attached to the cutting die and the projecting heights of the cutting blades and the creasing-line forming blade are adjusted in advance, breakage of creasing lines (excessively deep cutting) by the creasing-line forming blade can be prevented, and continuous operation can be stably performed. Further, since the fine channels within the temperature-maintaining platen are filled with liquid, the temperature-maintaining platen does not deform even when the cutting blades and the creasing-line forming blade are pressed thereagainst; that is, the temperature-maintaining platen has a pressure-resistant structure.

BRIEF DESCRIPTION OF THE DRAWINGS

FIG. 1 is a developed view of a product formed from a plastic sheet having creasing lines cut by means of a creased-plastic-sheet manufacturing apparatus of the present invention.

FIG. 2 is a cross sectional view of the creased-plastic-sheet manufacturing apparatus (punching machine) of the present invention.

FIGS. 3(1) and 3(2) are cross sectional views of a plastic sheet on which a creasing line is formed and which is cut by means of the creased-plastic-sheet manufacturing apparatus (punching machine) of the present invention.

FIG. 4 is a perspective view of a temperature-maintaining platen of the present invention.

FIGS. 5(1) and 5(2) are perspective and side views, respectively, showing a warm water pipe.

FIG. 6 shows cross sections of the temperature-maintaining platen of the present invention taken along different directions.

FIG. 7 is a cross sectional view showing the flow of warm water flowing through fine channels of the temperature-maintaining platen of the present invention.

BEST MODE FOR CARRYING OUT THE INVENTION

A best mode for carrying out the invention will be described with reference to the drawings. In the following description, the creased-plastic-sheet manufacturing apparatus of the present invention uses a lower-platen-movable-type, automatic flat punching apparatus.

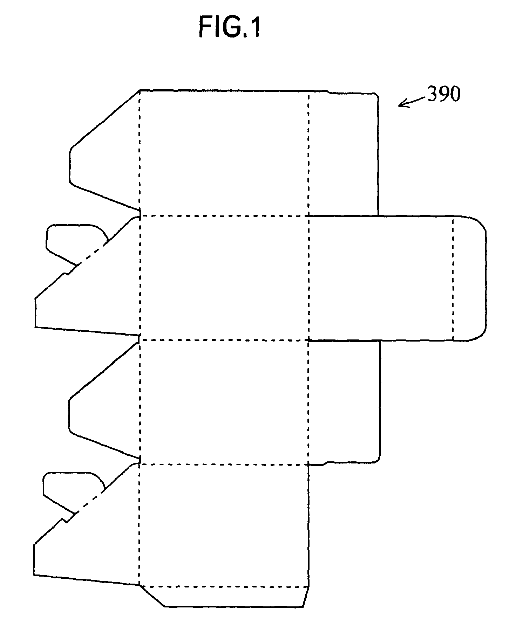

FIG. 1 shows a sheet 390 having creasing lines cut in a developed shape of a plastic container to be manufactured. Solid lines in FIG. 1 show portions cut by cutting blades, and broken lines in FIG. 1 show creasing lines formed by means of creasing-line forming blades.

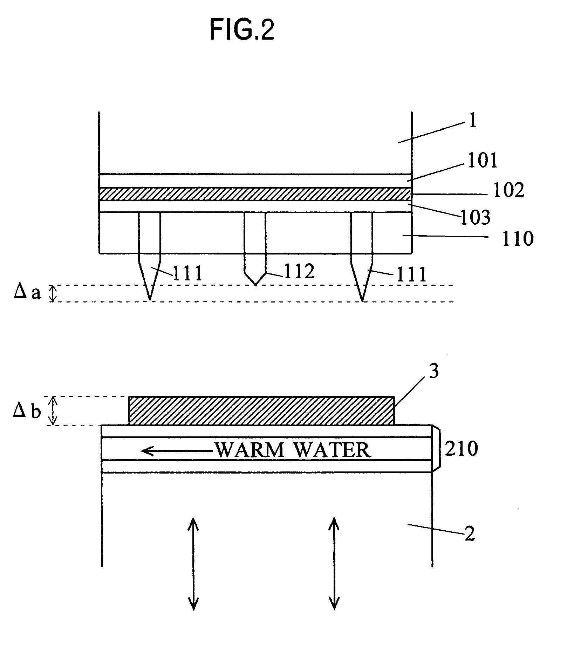

FIG. 2 is a cross sectional view of a creased-plastic-sheet manufacturing apparatus (punching machine) which simultaneously performs formation of creasing lines and die cutting. The punching machine includes two flat platens; i.e., an upper platen 1 and a lower platen 2. The upper platen 1 is a stationary portion for receiving the lower platen. The lower platen 2 is a movable portion which can move upward and downward.

The upper platen 1 is composed of an unevenness-removal-paper protection plate 101, an unevenness removal paper 102, a bottom plate 103 (steel plate), and a cutting die 110. Cutting blades 111 and a creasing-line forming blade 112 are attached to the cutting die 110. The cutting blades 111 are sharper in tip angle than the creasing-line forming blade 112.

When a plastic sheet 3 on a temperature-maintaining platen 210 is cut in a shape of a developed view shown in FIG. 1, the cutting blades cut the sheet, and the creasing-line forming blade presses the sheet such that its tip reaches the midpoint in the depth direction. Therefore, the difference in height $\Delta a$ between the tip ends of the cutting blades and the tip end of the creasing-line forming blade is adjusted to become slightly smaller than the thickness $\Delta b$ of the sheet. That is, the creasing-line forming blade is adjusted to satisfy the following equation.

$$\Delta a = \Delta b - \alpha \qquad (\Delta b > \alpha \geq \Delta b/2)$$

This cutting die 110 is prepared for each of products. Therefore, when sheet cutting by the cutting die is performed for a different product, the present apparatus (punching machine) can be used as is, except that the cutting die 110 is exchanged.

The temperature-maintaining platen 210 is secured to the lower platen 2 of the punching machine body (the main body of a movable portion of the flat punching apparatus). A flow passage defined by fine channels is provided in the temperature-maintaining platen, and warm water whose temperature is adjusted outside the temperature-maintaining platen is circulated through the flow passage, so that a transferred sheet can be warmed to a uniform temperature. Since the hollow space within the temperature-maintaining platen is defined by fine channels, the temperature-maintaining platen has sufficient strength against pressing.

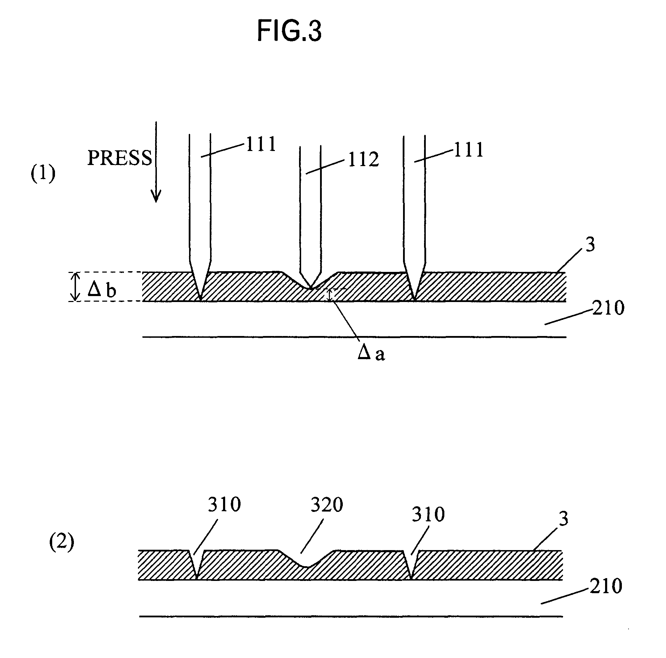

FIG. 3(1) is a cross sectional view of a sheet showing a state when the sheet is being pressed by the punching machine of the present invention, and FIG. 3(2) is a cross sectional view of the sheet showing a state after being pressed. When a sheet is pressed as shown in FIG. 3(1), the sheet is cut by means of the cutting blades 111, and a depression is formed by means of the creasing-line forming blade 112, because of a difference in height between the creasing-line forming blade 112 and the cutting blades 111. FIG. 3(2) shows a state after removal of pressing by means of the creasing-line forming blade. On the sheet, slits 310 are formed by means of the cutting blades, and a creasing line 320 is formed by means of the creasing-line forming blade. In this case, if the entire sheet is not warmed uniformly, entirely uniform creasing lines cannot be formed.

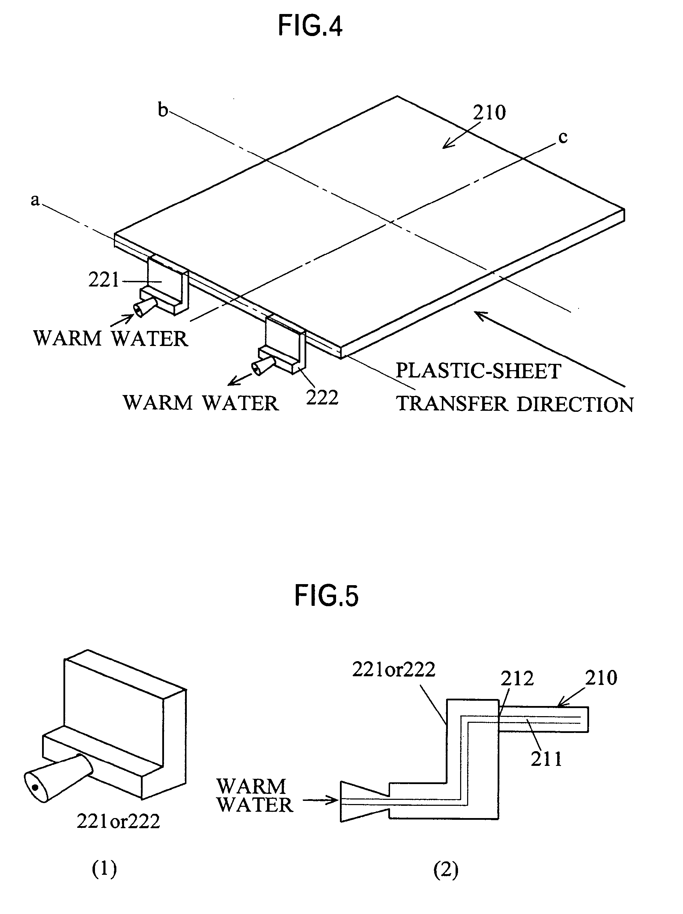

FIG. 4 is a perspective view of the temperature-maintaining platen 210. A warm water pipe 221 (inlet side) and a warm water pipe 222 (outlet side) are attached to a side surface of the temperature-maintaining platen. The interior of the temperature-maintaining platen is a hollow space defined by fine channels 211 connected to form a grid pattern. Warm water fills the hollow space, while circulating. Further, fine holes 212 for introducing warm water into the temperature-maintaining platen 210 are provided.

Notably, the temperature-maintaining platen 210 is thin, and the fine holes 212 for introducing warm water into the temperature-maintaining platen 210 are very small. Therefore, the warm water pipe 221 (inlet side) and the warm water pipe 222 (outlet side) are attached to a side surface of the temperature-maintaining platen. FIG. 5(1) is a perspective view of the warm water pipe (221 or 222), and FIG. 5(2) is a side view of the warm water pipe (221 or 222). A generally L-shaped channel is provided in the warm water pipe (221 or 222), and warm water is introduced into the interior of the temperature-maintaining platen 210 via the warm water pipe.

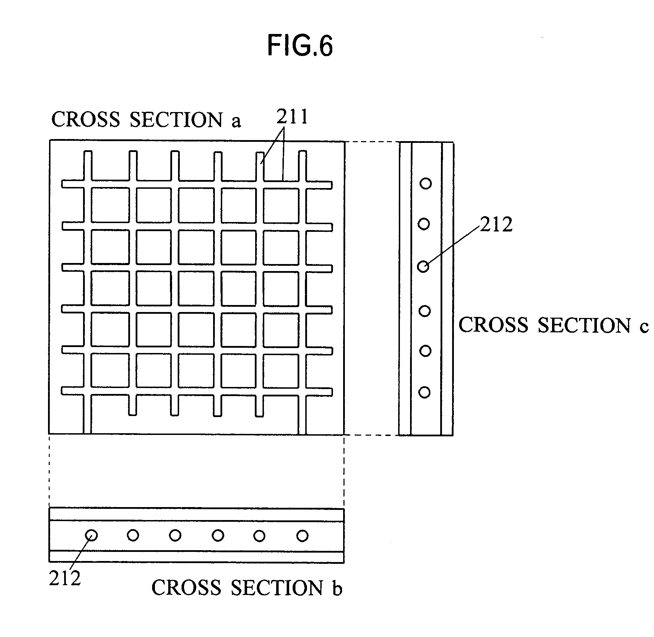

FIG. 6 shows cross sections of the temperature-maintaining platen 210 taken along different lines (one-dot chain lines). Cross section a is a cross section obtained by horizontally sectioning the temperature-maintaining platen 210 along line a. The interior of the temperature-maintaining platen is a hollow space composed of the fine channels 211 connected to form a grid pattern. Warm water fills the hollow space, while circulating. Cross section b is a cross section obtained by vertically sectioning the temperature-maintaining platen 210 along line b. Cross section c is a cross section obtained by vertically sectioning the temperature-maintaining platen 210 along line c. Warm water circulates via the fine holes 212.

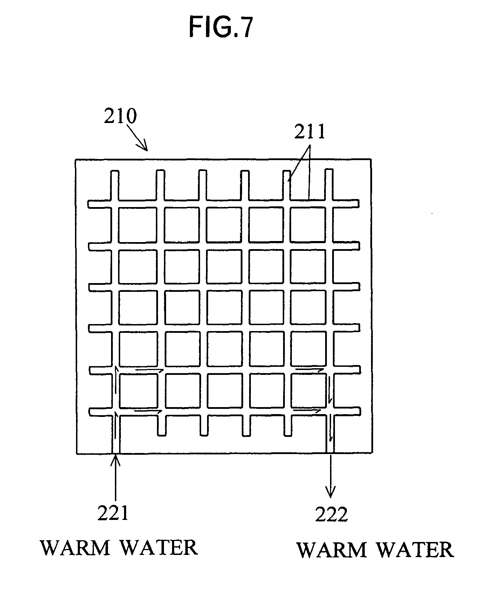

FIG. 7 shows the circulation (flow) of warm water. Warm water entering the inlet of the warm water pipe 221 is caused to pass through the fine channels 211 as shown by arrows, and finally discharged from the outlet of the warm water pipe 222. As described above, the plurality of fine channels 211 enable the entire temperature-maintaining platen 210 to be maintained at a uniform temperature.

INDUSTRIAL APPLICABILITY

In the present invention, since the temperature-maintaining platen is heated by means of warm water, which has a large heat capacity, a uniform surface temperature of the entire plastic sheet can be maintained even in a continuous punching process. Therefore, smooth creasing lines can be formed.

Further, since the fine channels within the temperature-maintaining platen are filled with liquid, the temperature-maintaining platen does not deform even when the cutting blades and the creasing-line forming blade are pressed thereagainst; that is, the temperature-maintaining platen has a pressure-resistant structure.

**Claims**

1. A creased-plastic-sheet manufacturing apparatus including a punching apparatus for manufacturing a plastic sheet having creasing lines, which is folded into a container or the like, the creased-plastic-sheet manufacturing apparatus being **characterized in that** the punching apparatus includes:

    (1) a flat platen to which a cutting die is secured, the cutting die carrying cutting blades, including a creasing-line forming blade, embedded into the cutting die; and
    (2) a temperature-maintaining platen disposed in opposition to the flat platen and equipped with a temperature-maintaining mechanism including a flow passage formed within the temperature-maintaining platen, the flow passage being formed of fine channels through which a temperature-maintaining liquid can be passed.

# FIG.1

390

# FIG.2

WARM WATER

# FIG.3

(1)

PRESS

111  112  111

Δb

3

210

Δa

(2)

310  320  310  3

210

# FIG.4

b

a

210

c

221

WARM WATER

WARM WATER

222

PLASTIC-SHEET
TRANSFER DIRECTION

# FIG.5

221or222

(1)

221or222

212

210

WARM
WATER

211

(2)

9

# FIG.6

CROSS SECTION a 211

212

CROSS SECTION c

212 CROSS SECTION b

# FIG.7

210

211

221

WARM WATER

222

WARM WATER

## INTERNATIONAL SEARCH REPORT

| International application No. |
|---|
| PCT/JP2004/004532 |

**A. CLASSIFICATION OF SUBJECT MATTER**
Int.Cl⁷ B29C53/06, B65B61/00

According to International Patent Classification (IPC) or to both national classification and IPC

**B. FIELDS SEARCHED**

Minimum documentation searched (classification system followed by classification symbols)
Int.Cl⁷ B29C53/06, B65B61/00, B31B1/25

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 5-212783 A (Shin-Etsu Polymer Co., Ltd.), 24 August, 1993 (24.08.93), Par. Nos. [0003], [0005]; Fig. 1 (Family: none) | 1 |
| Y | JP 9-118327 A (Kabushiki Kaisha Suzuki), 06 May, 1997 (06.05.97), Claims; Figs. 2, 4 (Family: none) | 1 |
| Y | JP 3006932 U (KO Shoichi), 31 January, 1995 (31.01.95), Claims; drawings (Family: none) | 1 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 June, 2004 (28.06.04) | 13 July, 2004 (13.07.04) |

| Name and mailing address of the ISA/<br>Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2004/004532 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 5-154901 A (Shin-Etsu Polymer Co., Ltd.), 22 June, 1993 (22.06.93), Par. Nos. [0010], [0011] (Family: none) | 1 |
| A | JP 6-84048 B2 (Mitsubishi Plastics, Inc.), 26 October, 1994 (26.10.94), Claims; drawings & JP 61-199942 A | 1 |
| A | JP 5-185537 A (TDK Corp.), 27 July, 1993 (27.07.93), Claims; drawings (Family: none) | 1 |

Form PCT/ISA/210 (continuation of second sheet) (January 2004)

**REFERENCES CITED IN THE DESCRIPTION**

**Patent documents cited in the description**

- JP H08294961 A

- JP H10024488 A